# DEMANDE DE BREVET EUROPEEN

(11) **EP 0 874 504 A1**
(43) Date de publication de la demande: **28.10.1998**
(21) Numéro de dépôt: 98480022.7
(22) Date de dépôt: 14.04.1998
(51) Int. Cl.: H04M 1/00

(54) **Appareil téléphonique perfectionné destiné aux malentendants**

(30) Priorité: 18.04.1997 FR 9705040
(71) Demandeur: Barok, Frédéric, 06100 Nice (FR)
(72) Inventeur: Barok, Frédéric, 06100 Nice (FR)
(74) Mandataire: Hautier, Jean-Louis

(57) **Abrégé**

La présente invention concerne un appareil téléphonique destiné à être utilisé par les malentendants, qui comporte de manière classique :
- un émetteur ou haut-parleur (2),
- un récepteur ou microphone (3), et
- des moyens de réglage du volume sonore.

Cet appareil est caractérisé en ce qu'il comporte un amplificateur des basses fréquences (5) qui proviennent de l'émetteur (2), pour améliorer la bande de fréquence acoustique, et un correcteur de la courbure des sons graves et aigus (6), pour adapter les sons émis à toutes les oreilles humaines.

L'invention trouve une application préférentielle dans le domaine de l'équipement des personnes malentendantes.

## Description

La présente invention concerne un appareil téléphonique destiné à l'usage des malentendants.

Il comporte, de manière tout à fait classique, un émetteur, un récepteur et des moyens de réglage du volume sonore.

L'état de la technique est bien défini par le document FR-A-2.691.868 qui propose un amplificateur destiné à obtenir une meilleure compréhension de la parole par les malentendants. Cet amplificateur utilise une courbe de réponse favorisant les fréquences algues entre 1500 et 4000 Hertz. La montée de cette courbe est très raide vers 2000 hertz. Cet amplificateur peut être utilisé dans des appareils destinés spécialement aux malentendants, tels que téléphones, transmetteurs du son par HF ou infrarouges ; ou simplement par un couplage filaire sur des appareils domestiques. L'énergie nécessaire à l'amplificateur objet de l'invention peut être empruntée à une pile incorporée. Il peut être avantageux de couper automatiquement par un interrupteur électronique commandé par la présence du son à transmettre, ou par une tension dont la présence est liée à celle du son à transmettre.

US-A-5.533.120 : Système de haut-parleur amplifié comprenant un filtre d'encoches adaptable qui peut s'adapter dynamiquement à la fréquence des oscillations rétroactives provoquées par la fréquence acoustique rétroactive de manière à faire disparaître les oscillations rétroactives avant qu'elles soient amplifiées au-dessus d'un niveau audible. Le filtre d'encoches adaptable est réalisé comme un filtre adaptable de réponse finie à impulsion par le biais d'un processeur à signal digital. Le filtre à réponse finie à impulsion a également un facteur de convergence adaptable qui minimise le bruit introduit dans le filtre. Un sous-programme limitatif est utilisé pour limiter les valeurs des coefficients du filtre à réponse finie à impulsion pour protéger le filtre du souffle du au dérangements du signal d'entrée. Le système de haut-parleur amplifié comprend aussi un circuit de câblage permettant de multiples bandes d'equalization, dont chaque bande est capable d'amplification. La fonction de l'equalizer multi-bandes permet aux personnes malentendantes d'ajuster la fréquence des téléphones à haut-parleur manuel, pour permettre une meilleure intelligibilité, due à une forte augmentation du volume par rapport à un combiné téléphonique normal.

US-A-5.099.514 : Unité de téléphone multi-fonction pour les personnes utilisant le téléphone pendant de longues périodes. Elle est connectée à un téléphone conventionnel en enlevant le cordon du téléphone du combiné normal et en le branchant dans l'unité auxiliaire. L'unité comprend un casque d'écoute équipé de deux écouteurs contrôlés indépendamment et d'un émetteur. Un transformateur de type A.C./D.C. à fiche mâle externe est utilisé pour fournir de la puissance à l'unité. L'unité a des contrôles de volume séparés et des equalizers séparés pour les récepteurs respectifs. Un interrupteur de débranchement est connecté au circuit de transmission de la voix pour permettre à l'utilisateur de parler avec d'autres personnes dans la pièce sans que la personne sur l'autre ligne entende la conversation. Un microphone interne est également fourni pour qu'il puisse être connecté à l'interrupteur de débranchement et permettre à l'utilisateur de recevoir les voix et les sons à proximité immédiate de l'unité dans que l'utilisateur n'ait à enlever l'unité-récepteur.

FR-A-2.511.211 : Combiné téléphonique à amplificateur réglable manuellement comportant :
- une structure de combiné téléphonique standard,
- un microphone,
- un écouteur,
- un amplificateur microphonique à gain automatiquement réglable,
- un amplificateur d'écouteur à gain réglable manuellement par le potentiomètre et automatiquement par le système de commande automatique en simultanéité avec l'amplificateur microphonique,
- un système de commande automatique (à l'aide d'une bascule électronique) commandé par la voix de l'utilisateur à partir des signaux issus du microphone du combiné agissant à l'inverse sur le gain des amplificateurs,
- un réseau de filtrage ajustable permettant d'adapter la courbe de réponse de l'écouteur à celle de l'audiogramme de l'utilisateur, ceci à l'aide d'un tournevis pénétrant par l'orifice de la structure,
- un circuit compresseur ajustable évitant la transmission de niveaux acoustiques excessifs pour les malentendants atteints de "recrutement",
- un circuit d'inter-connexion des divers éléments ci-dessus mentionnés.

Avec un tel appareil, les malentendants ne peuvent atteindre le seuil d'audibilité normale. Cet appareil ne peut en aucun cas s'adapter aux prothèses auditives réalisées et vendues dans le commerce.

La présente invention est beaucoup plus facile d'utilisation et est d'une efficacité bien plus importante.

A cet effet, la présente invention concerne un appareil téléphonique destiné à l'usage des malentendants, qui comporte de manière classique :
- un émetteur ou haut-parleur,
- un récepteur ou microphone, et
- des moyens de réglage du volume sonore,
caractérisé par le fait qu'il comporte un moyen de réglage des basses fréquences et un moyen de réglage des hautes fréquences qui proviennent de l'émetteur, pour améliorer la bande de fréquence acoustique, et un correcteur de la courbure des sons graves et aigus, pour adapter les sons émis à toutes les oreilles humaines.

Les moyens de réglage et le correcteur sont constitués de potentiomètres.

Les deux potentiomètres des moyens de réglage commandent séparément l'amplification des fréquences graves et aiguës.

Les basses fréquences amplifiées sont comprises entre 800 et 3500 Hertz.

L'ensemble des composants électroniques, dont les moyens de réglage et le correcteur, est renfermé dans un coffret intégré à l'appareil téléphonique.

Le moyen de réglage des graves intervient en amont du moyen de réglage des aigus.

L'appareil est couplé à une alarme visuelle de la sonnerie dudit appareil téléphonique.

Les dessins ci-joints sont donnés à titre d'exemples indicatifs et non limitatifs. Ils représentent un mode de réalisation selon l'invention. Ils permettront de comprendre aisément l'invention.

La figure 1 représente une vue de face d'un appareil téléphonique équipé du dispositif selon l'invention.

La figure 2 représente une vue schématique du réseau téléphonique et du passage du message dans les différents composants qui constituent la présente invention.

La figure 3 représente les composants électroniques constituant l'invention et situés à l'intérieur de l'appareil téléphonique.

La figure 4 représente les composants électroniques constituant l'état de la technique actuel et situés à l'intérieur de l'appareil téléphonique.

La figure 5 représente une vue schématique des composants de l'alimentation directe.

La figure 6 représente une vue schématique des composants de l'amplificateur.

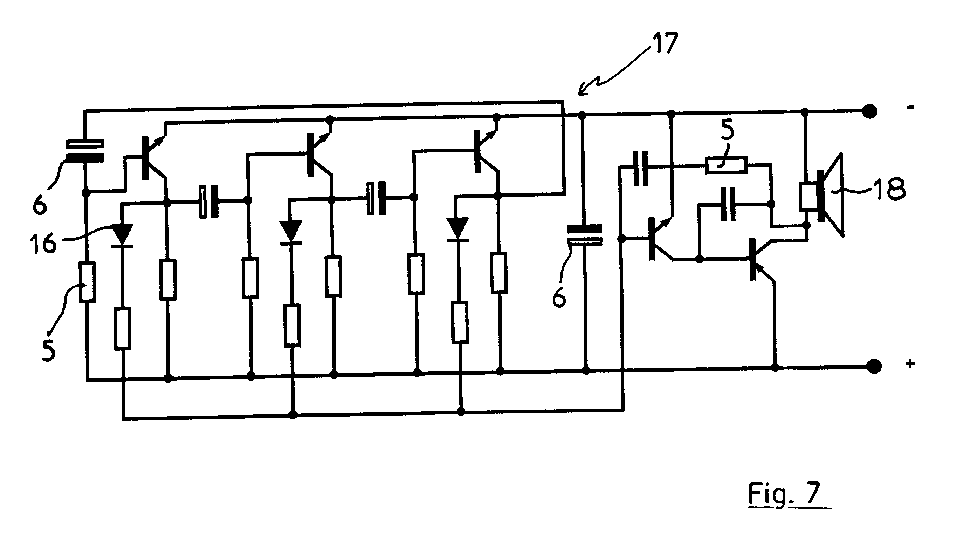

Enfin la figure 7 représente une vue schématique des composants de la sonnerie.

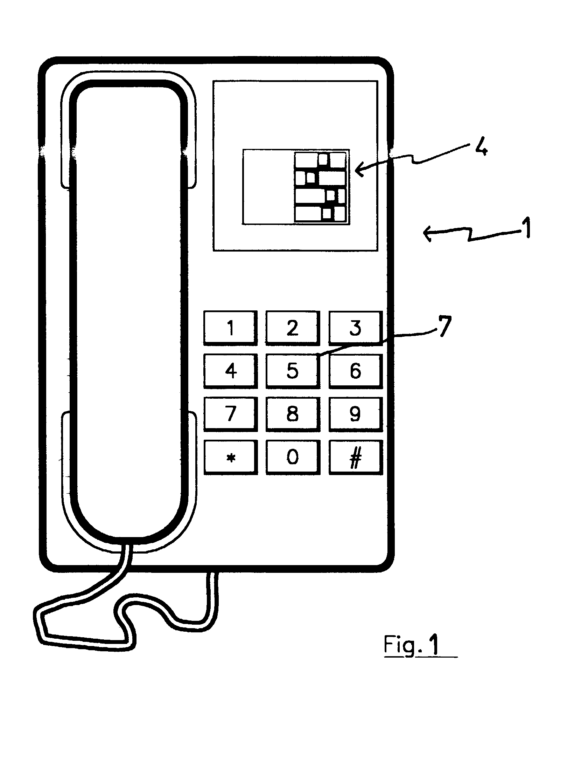

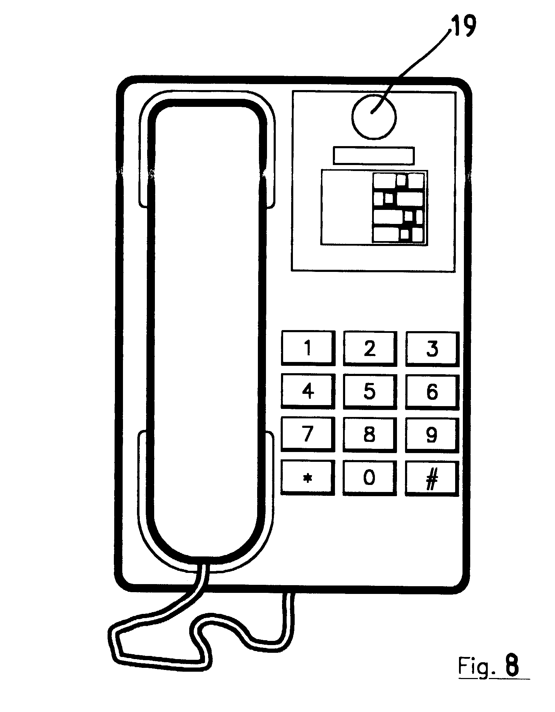

La figure 8 est une vue schématique de l'appareil équipé du dispositif selon l'invention selon un autre mode de réalisation que celui représenté à la figure 1 car il y a en plus un spot lumineux.

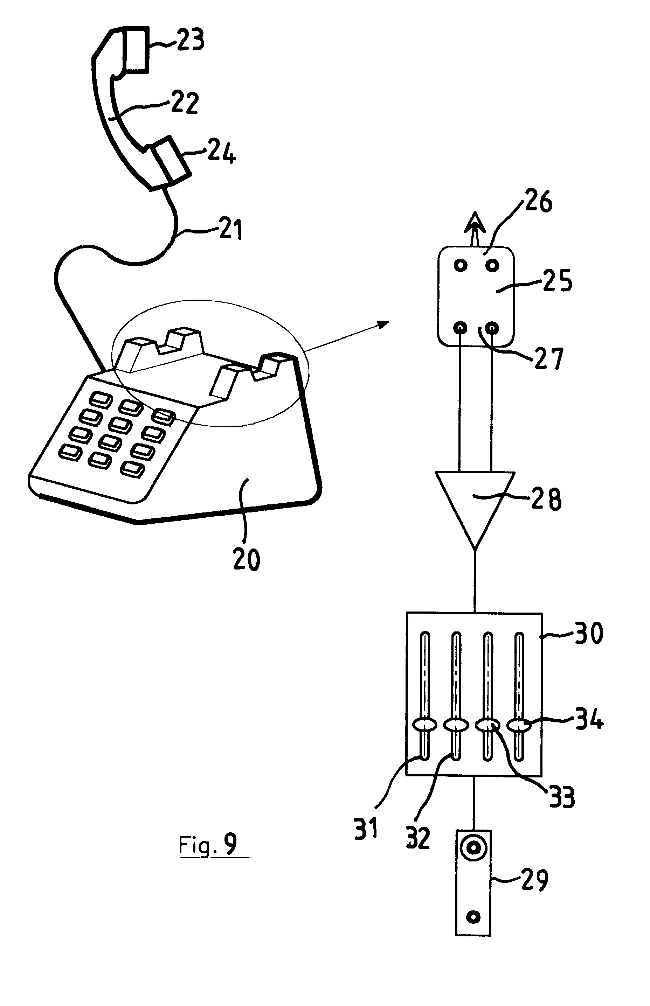

La figure 9 est une vue d'un schéma synoptique.

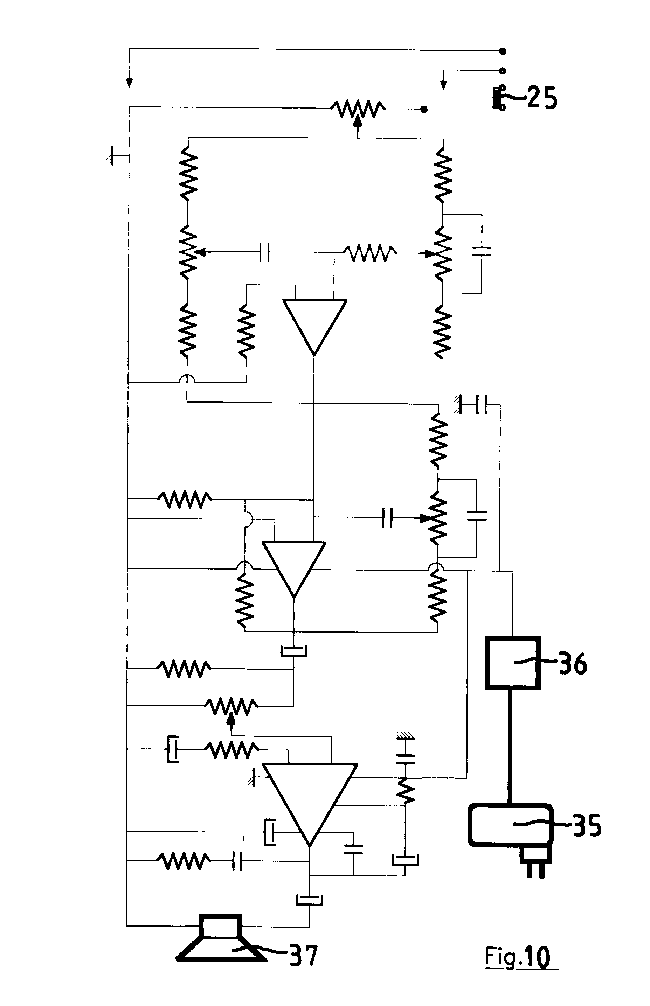

La figure 10 est une vue d'un circuit électronique comportant un système mélangeur de fréquences dit equalizer et d'un dispositif anti-larsen.

Sur la figure 1, l'appareil téléphonique 1 est bien représenté. Il met en évidence, de manière tout à fait classique, un clavier numérique 7, mais également des moyens de réglage du volume sonore 4. En fait, ces moyens de réglage du volume sonore 4 sont constitués par un équilibreur, c'est-à-dire que l'utilisateur pourra faire varier les différentes sonorités en fonction de leurs fréquences graves, aiguës, médium, etc.

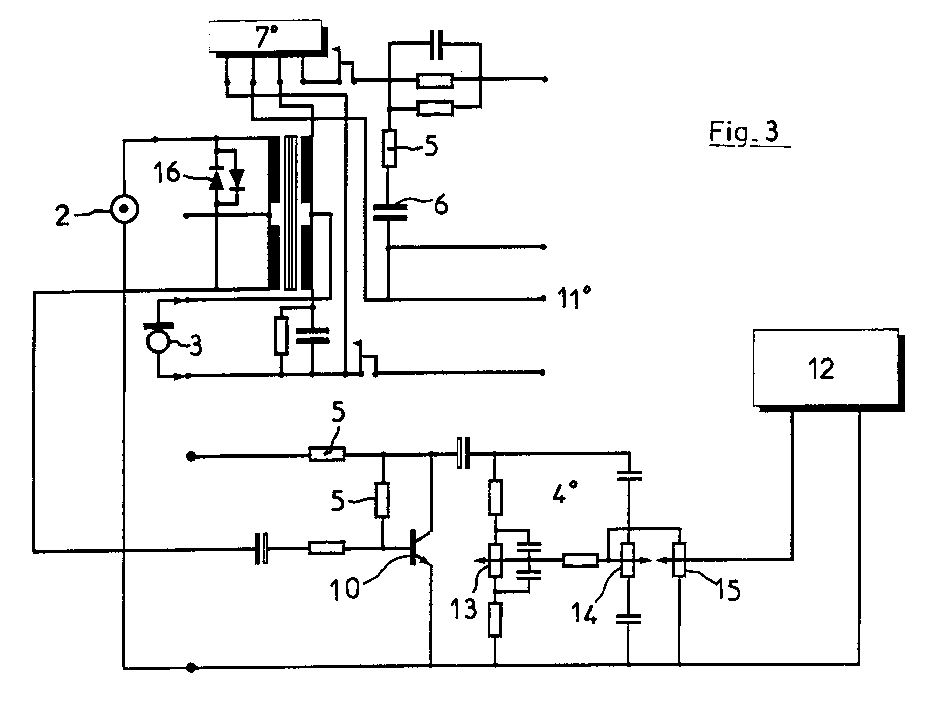

Ceci est possible du fait que, comme cela est représenté sur la figure 3, sont présents un correcteur des sons graves 14 et un correcteurs des sons aigus 15. Ces deux composants, correcteurs 14 et 15, sont constitués par des potentiomètres 14 et 15. On remarque également sur cette figure un certain nombre de transistors 10, mais aussi une alimentation directe 11. Il y a également un récepteur 2 et un microphone 3, et également un amplificateur 12.

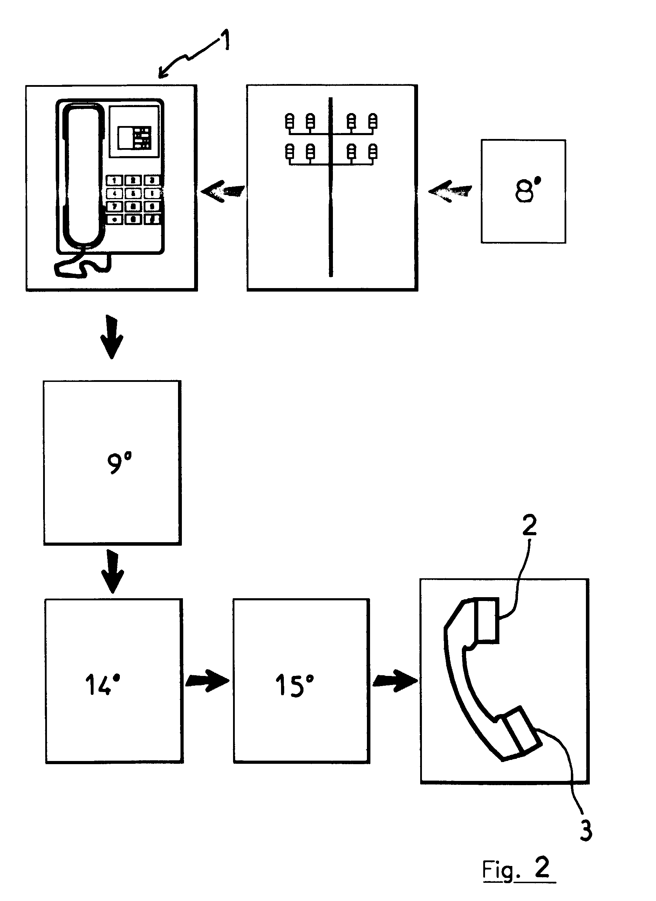

Comme on le voit bien maintenant sur la figure 2, la présente invention s'inscrit dans le schéma classique des transmissions téléphoniques. Le réseau P.T.T. 8 permet la transmission d'un signal qui va atteindre l'appareil téléphonique 1, ceci de manière tout à fait classique.

L'ensemble des opérations suivantes s'effectue maintenant à l'intérieur de l'appareil téléphonique, à savoir, il y a tout d'abord une alimentation directe 9, puis le potentiomètre basses fréquences 14 joue son rôle. Ensuite, le potentiomètre des hautes fréquences 15 prend le relais, pour fournir, au niveau du combiné, à la personne malentendante, un son correct, c'est-à-dire, dont les fréquences sont adaptées à son oreille. Bien entendu, cette adaptabilité sera réalisée par le malentendant lui-même qui réglera au niveau des moyens de réglage 4 les aigus et les graves, ces boutons étant reliés directement aux potentiomètres 14 et 15.

Il y a également la possibilité de régler l'intensité de ces aigus et de ces graves, par l'intermédiaire du potentiomètre de réglage de l'intensité 13.

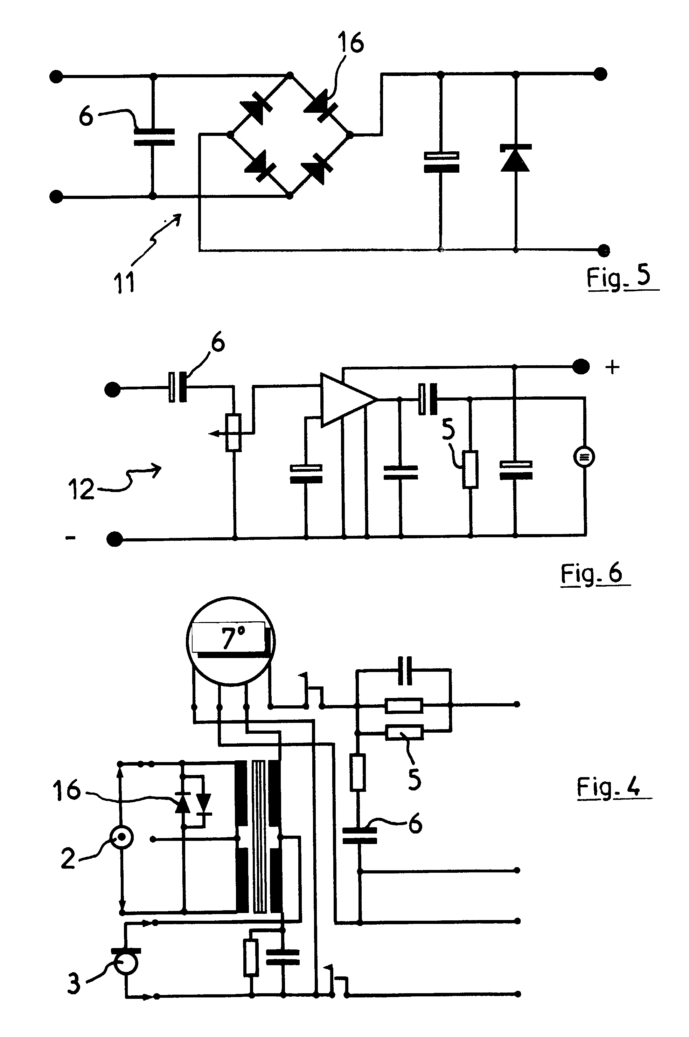

La figure 4 est identique à la figure 3, mais elle représente l'état de la technique. Ainsi, sur cette figure, on ne retrouve pas le moyen de réglage du volume sonore 4.

Les figures 5 à 7 représentent des vues détaillées de certaines parties connues de l'état de la technique, qui permettent le bon fonctionnement de l'appareil téléphonique 1 selon l'invention.

Ainsi, la figure 5 représente l'alimentation directe 11, la figure 6 représente l'amplificateur 12 et la figure 7 représente la sonnerie 17.

Cette sonnerie 17 est adaptée à l'utilisation pour les malentendants, elle comporte un haut-parleur 18 qui peut émettre des sons multiples, chaque son ayant des fréquences différentes, de sorte que la personne malentendante arrivera toujours à capter l'un ou l'autre des sons.

L'ensemble de ces fonctions est assuré par des composants électroniques très connus tels que résistances 5, condensateurs 6, diodes 16.

La présente invention concerne un appareil téléphonique à l'usage des malentendants, qui se compose de manière classique :
- un récepteur ou écouteur téléphonique, et
- un émetteur ou microphone téléphonique.

Ces deux éléments sont solidaires du combiné téléphonique.

S'ajoutent à cela, un amplificateur basses fréquences, d'une puissance de 2,5 Watts, et un correcteur de courbes pour ajuster les graves ou aigus à la courbe d'audiométrie de l'oreille déficiente du malentendant, appelé aussi équilibreur, la réception téléphonique se faisant soit en réception normale, soit en réception amplifiée.

L'invention trouve son application préférentielle dans le domaine de l'équipement des personnes malentendantes.

La présente invention est facile d'utilisation et est d'une grande efficacité.

On trouve donc sur cet appareil téléphonique les parties suivantes :
- un combiné téléphonique,
- un poste téléphonique avec un clavier numérique avec mémoire,
- un amplificateur de puissance confortable de 2,5 Watts, ce qui permet lors de la réception amplifiée à faible niveau de ne pas apporter de distorsions dans les fréquences utilisées par la personne malentendante ; cet amplificateur est conçu avec un circuit logique de conception récente,
- un correcteur de courbes (appelé aussi "équilibreur") pour les fréquences graves et les fréquences aiguës ; ce réglage se fait d'ailleurs séparément par deux boutons agissant sur deux potentiomètres linéaires ; ce correcteur de courbes étant à l'entrée de l'amplificateur de puissance qui lui est réglable en volume par un bouton agissant sur un potentiomètre de gain,
- un système de commutations de la fonction réception normale à la réception amplifiée se fait par touches sensitives, et
- une sonnerie électronique trois tons, réglable en tonalité, est intégré au poste téléphonique.

Cet appareil est constitué par un amplificateur avec en amont un équilibreur pour les fréquences basses et les fréquences aiguës (bandes de fréquences retenues par l'administration).

Le système est commandé par un équilibreur, pour permettre de mixer à volonté le mélange des fréquences audibles manuellement, afin d'adapter l'oreille humaine, apportant ainsi un équilibre et un bien-être auditif. C'est un mixeur de fréquences rétablissant avec harmonie compatible à une personne humaine non atteinte de surdité.

L'appareil représenté à la figure 8 est identique à l'appareil représenté à la figure 1. Cependant, un spot lumineux 19 a été disposé pour signaler à l'utilisateur malentendant qu'il y a un appel, ou une communication en cours.

La figure 9 est un schéma synoptique qui met en évidence un appareil téléphonique classique 20 avec son cordon de raccordement 21, un microphone 24, un combiné 22, un récepteur 23.

De manière à mettre en place le dispositif selon l'invention, il suffit de retirer le cordon 21 et le combiné 22 pour mettre en place un dispositif selon l'invention, grâce aux plots de raccordement 25, qui permettent de raccorder le micro 26, le récepteur 27 à l'appareil téléphonique 20. Sur ce cordon, est situé un amplificateur 28.

Entre cet amplificateur et le combiné téléphonique 29 amplifié pour malentendants, est mis en place un equalizer 30 selon l'invention. Cet equalizer 30 est équipé de quatre boutons réglables, un bouton 31 pour le volume ou le gain, un bouton 32 pour les graves de 40 hertz à 1 kilo-hertz plus 15 dB, un bouton 33 pour la bande médium de 800 hertz à 2 kilo-hertz plus 12 dB, un bouton 34 pour la bande aigue 2 kilo-hertz à 15 kilo-hertz plus 15 dB.

L'equalizer 30 peut comporter une touche qui permet au décrochage du combiné de choisir si l'on veut utiliser l'equalizer 30 ou si l'on souhaite utiliser le combiné classique 22, sans réglage pour les personnes atteintes de surdité.

Sur le circuit électronique représenté à la figure 10, sont représentés les principaux composants avec le bloc d'alimentation 35, un transformateur 36, l'arrivée du câble conducteur vers les combiné, l'arrivée du câble avec les plots 25, voir raccordement au combiné. On retrouve également le récepteur 37 du combiné.

### REFERENCES

1. Appareil téléphonique
2. Ecouteur ou récepteur
3. Microphone ou émetteur
4. Moyens de réglage du volume sonore ou équilibreur
5. Résistance
6. Condensateur
7. Clavier numérique
8. Réseau P.T.T.
9. Alimentation directe
10. Transistor
11. Alimentation directe
12. Amplificateur
13. Potentiomètre de réglage de l'intensité ou correcteur
14. Potentiomètre de réglage des graves
15. Potentiomètre de réglage des aigus
16. Diode
17. Sonnerie
18. Haut-parleur
19. Spot lumineux
20. Appareil téléphonique
21. Cordon de raccordement
22. Combiné
23. Récepteur
24. Microphone
25. Plots de raccordement
26. Micro
27. Récepteur
28. Amplificateur
29. Appareil téléphonique
30. Equalizer
31. Bouton pour le volume ou le gain
32. Bouton pour les graves de 40 hertz à 1 kilo-hertz plus 15 dB
33. Bouton pour la bande médium de 800 hertz à 2 kilo-hertz plus 12 dB
34. Bouton pour la bande aigue 2 kilo-hertz à 15 kilo-hertz plus 15 dB
35. Bloc alimentation
36. Transformateur
37. Récepteur

## Revendications

1. Appareil téléphonique (1) destiné à l'usage des malentendants, qui comporte de manière classique :
- un émetteur ou haut-parleur (2),
- un récepteur ou microphone (3), et
- des moyens de réglage du volume sonore (4),
caractérisé par le fait
qu'il comporte un moyen de réglage des basses fréquences (14) et un moyen de réglage des hautes fréquences (15)qui proviennent de l'émetteur (2) , pour améliorer la bande de fréquence acoustique, et un correcteur de la courbure des sons graves et aigus (13), pour adapter les sons émis à toutes les oreilles humaines,
que les moyens de réglage (14 et 15) et le correcteur (13) sont constitués de potentiomètres,
que les deux potentiomètres (14 et 15) commandent séparément l'amplification des fréquences graves et aiguës.

2. Appareil, selon la revendication 1, caractérisé par le fait
que les basses fréquences amplifiées sont comprises entre 800 et 3500 Hertz.

3. Appareil, selon l'une quelconque des revendications 1 à 2, caractérisé par le fait
que l'ensemble des composants électroniques, dont les moyens de réglage (14 et 15) et le correcteur (13), est renfermé dans un coffret intégré à l'appareil téléphonique (1).

4. Appareil, selon l'une quelconque des revendications 1 à 3, caractérisé par le fait
que le moyen de réglage des graves (14) intervient en amont du moyen de réglage des aigus (15).

5. Appareil, selon l'une quelconque des revendications 1 à 4, caractérisé par le fait
que l'appareil (1) est couplé à une alarme visuelle (19) de la sonnerie dudit appareil téléphonique (1).
